# EUROPEAN PATENT APPLICATION

(11) **EP 1 591 215 A1**
(43) Date of publication of application: **02.11.2005**
(21) Application number: 05008154.6
(22) Date of filing: 14.04.2005
(51) Int. Cl.: B28D 1/04, B23D 47/02, B23D 45/02

(54) **Guiding arrangement for a sliding carriage of a sawing machine**

(30) Priority: 30.04.2004 IT MO20040100
(71) Applicant: S.K.C. di Tondini Claudio, 48010 Cotignola (RA) (IT)
(72) Inventor: Tondini, Claudio, 48010 Cotignola (Ra) (IT)
(74) Representative: Luppi, Luigi

(57) **Abstract**

Sawing machine comprising a guide beam (5) connected at its ends to uprights (3) and slidingly supporting by means of a carriage (12) a tool-motor unit (8) suitable for defining a cutting plane, between said guide beam (5) and said carriage (12) there being arranged rolling bodies (15) having rotation axes that are transversal (A) to said cutting plane, and further rolling bodies (16) having further rotation axes (B) arranged in such a way as to oppose shifts of said carriage (12) that are transverse to said cutting plane.

## Description

The invention relates to a sawing machine, in particular a sawing machine for materials intended for building.

Sawing machines are known that are used to cut this materials that comprise a support bed and a guide beam arranged transversely above this support bed and connected to it by two uprights fixed to their ends. The guide beam together with the two uprights constitutes a bridge structure. A tool-motor unit is connected to this structure, which tool-motor unit is provided with a carriage that is able to run along the guide beam by means of bearings. With the tool-motor unit a cutting tool is associated, for example an abrasive or diamond disc arranged so as to work on a cutting plane parallel to a plane that passes through a longitudinal axis of the guide beam and through longitudinal axes of the uprights. Sometimes, in the known sawing machines, the uprights can be connected to the support bed in an adjustably angular position by means of knobs in such a way as to enable the bridge structure to be positioned according to processing requirements. In this way, the cutting plane can be tilted in relation to the support bed to make for example jolly-cuts (i.e. cuts at an angle of 45°), or cuts with different tilts that are often used in the building industry.

A drawback of the known sawing machines consists of the fact that they do not allow a precise cut of objects such as materials intended for building.

Another drawback of the known sawing machines is the great play that is generated by wear between the carriage and the guide beam, in particular the play that arises in a direction that is transverse to an advance direction of the tool-motor unit and which may cause undesired sticking of the carriage in the guide beam and consequent cutting imprecisions.

A further drawback of the known sawing machines is due to the excessive weight of the carriage and of the guide beam, which makes it difficult to handle.

An object of the present invention is to improve the sawing machines, in particular the sawing machines for materials intended for building.

Another object of the present invention is to provide a sawing machine that is able to accurately cut objects, for example materials intended for building.

A further object of the present invention is to provide a sawing machine in which the carriage can run along the guide beam in any attitude condition, thus significantly reducing transverse play in the advance direction of the tool-motor unit.

A still further object of the present invention is to provide a sawing machine that operates in a more regular manner without sticking between the carriage and the guide beam.

A still further object of the present invention is to provide a sawing machine in which the carriage and the guide beam have a reduced weight, in such a way as to easily regulate the position of the guide beam and in such a way as to easily handle the tool-motor unit.

In a first aspect of the invention, a sawing machine is provided comprising a guide beam connected at its ends to uprights and slidingly supporting by means of a carriage a tool-motor unit suitable for defining a cutting plane, between said guide beam and said carriage rolling bodies being arranged that have rotation axes that are transverse to said cutting plane, characterised in that further rolling bodies are provided having further rotating axes arranged so as to oppose shifts of the carriage that are transverse to the cutting plane.

In a second aspect of the invention, profiled means is provided that comprises a profiled body extending along an axis that extends in a longitudinal direction and having a cross section provided with a plurality of grooves shaped in such a way as to act as guide means for rolling bodies.

Owing to the present invention it is possible to provide a sawing machine that is able to cut objects with greater precision, for example materials intended for building.

Furthermore, owing to the present invention it is possible to obtain a sawing machine in which any play is significantly reduced that is transverse to a cutting plane of the tool-motor unit in such a way that the carriage can run more regularly along the guide beam in different attitude conditions. In this way an operator can cut objects more precisely and safely, avoiding sudden and dangerous shifts of the tool-motor unit that are transverse to the guide beam both parallel and transversely to the cutting plane and avoiding undesired sticking between the carriage and the guide beam.

Owing to the present invention it is possible to provide a sawing machine in which the carriage and the guide beam have a reduced weight. An operator can in this way more easily adjust the tilt of the guide beam and can more easily operate the tool-motor unit.

The invention can be more easily understood and implemented with reference to the attached drawings, which show an exemplifying and non-limitative embodiment thereof, in which:
Figure 1 is a perspective and schematic view of a sawing machine in a configuration.
Figure 2 is another schematic and perspective view of the sawing machine in Figure 1.
Figure 3 is another schematic and perspective view of the sawing machine in Figure 1 in a further configuration.
Figure 4 is a perspective and enlarged view showing the carriage of the sawing machine in Figure 1.
Figure 5 is a cross-section view of the guide beam of the sawing machine in Figure 1.
Figure 6 is a perspective view showing the tool-motor unit connected to the carriage of the sawing machine in Figure 1.

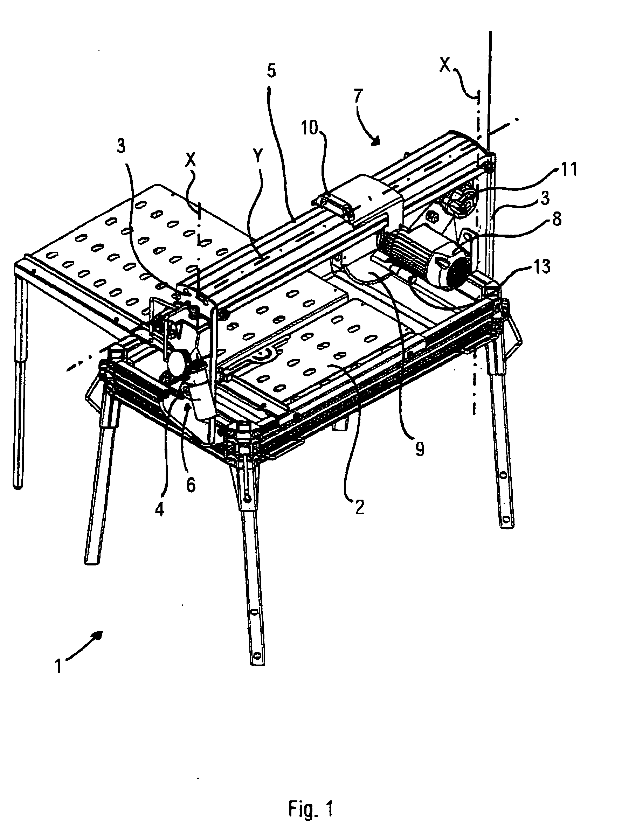

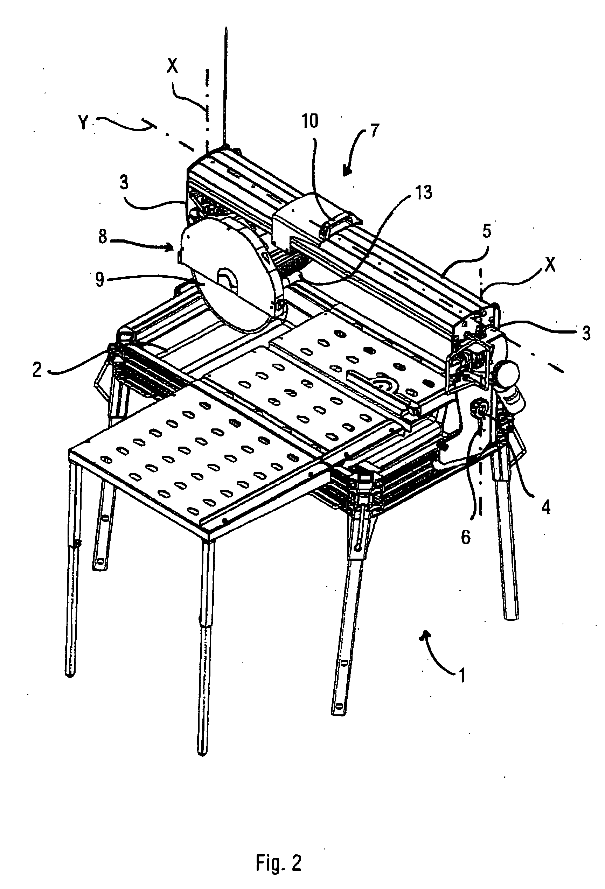

With reference to Figures 1 to 6, a sawing machine 1 for cutting objects is shown, in particular materials intended for building, comprising an extendible support bed 2, suitable for receiving such objects to be cut and to which two uprights 3 are connected each of which has a longitudinal axis X. The uprights 3 are fixed at their top ends to a guide beam 5 having a further longitudinal axis Y arranged perpendicularly to the longitudinal axes X. The uprights 3 and the guide beam 5 form a bridge structure 7 that is connected at the bottom to the support bed 2 in a rotatable manner by means of knobs 4 that enable its position to be varied. A graduated scale 6 arranged near one of the knobs 4 enables the bridge structure to be tilted correctly in relation to the support bed 2.

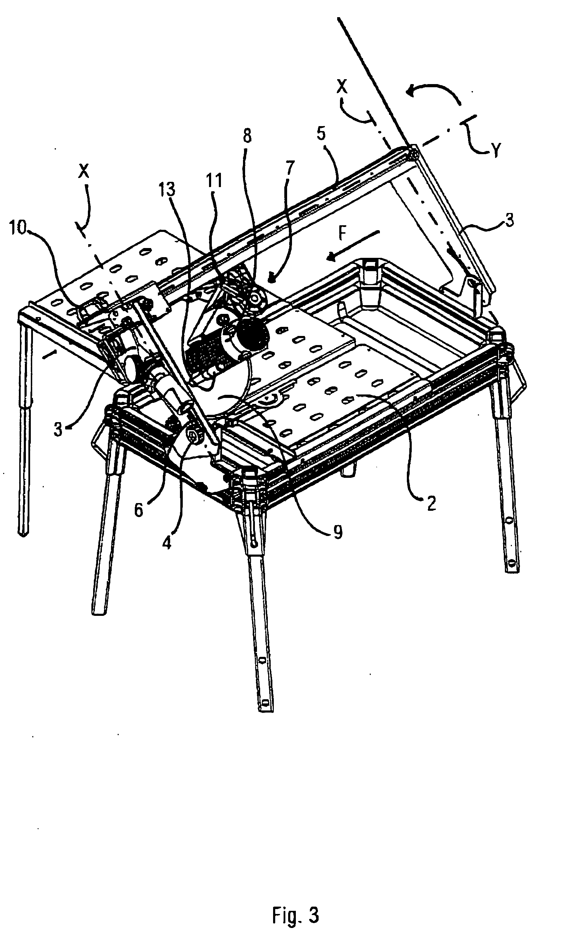

The guide beam comprises a profiled body 5 having a cross section provided with a plurality of grooves 17, 19 shaped in such a way as to act as guide means for rolling bodies. In this way the guide beam 5 is able to slidingly house along the further longitudinal axis Y a carriage 12 to which a tool-motor unit 8 is connected that is provided with a cutting tool, for example an abrasive or diamond disc 9. The abrasive or diamond disc 9 lies on a cutting plane parallel to a plane C that passes through the longitudinal axes X and through the further longitudinal axis Y. By acting on an adjusting lever 11 the position of the tool-motor unit 8 can be adjusted in relation to the carriage 12 and the cutting depth of the disc 9 can thus be varied by means of the bottom handle 13 according to the thickness of the objects that have to be cut. The tool-motor unit 8 can be made to advance in the direction indicated by the arrow F in Figure 3, by means of the top handle 10.

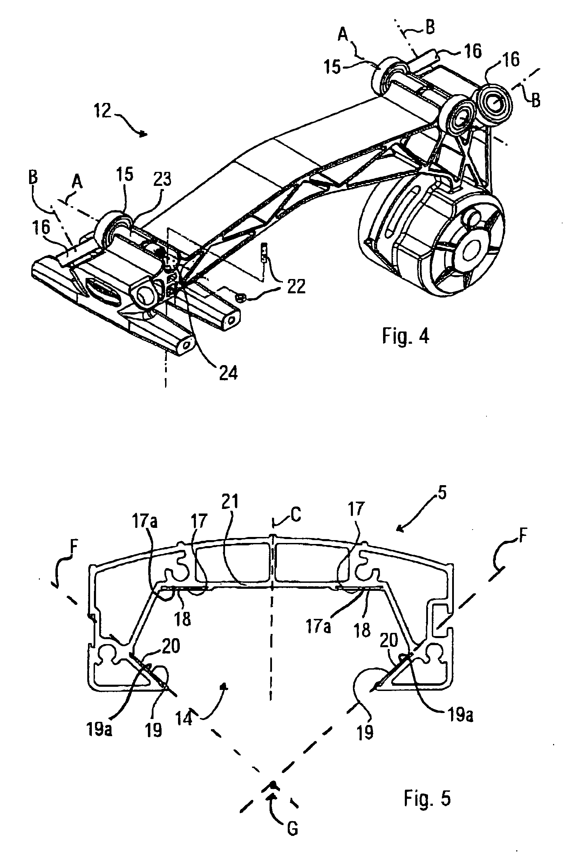

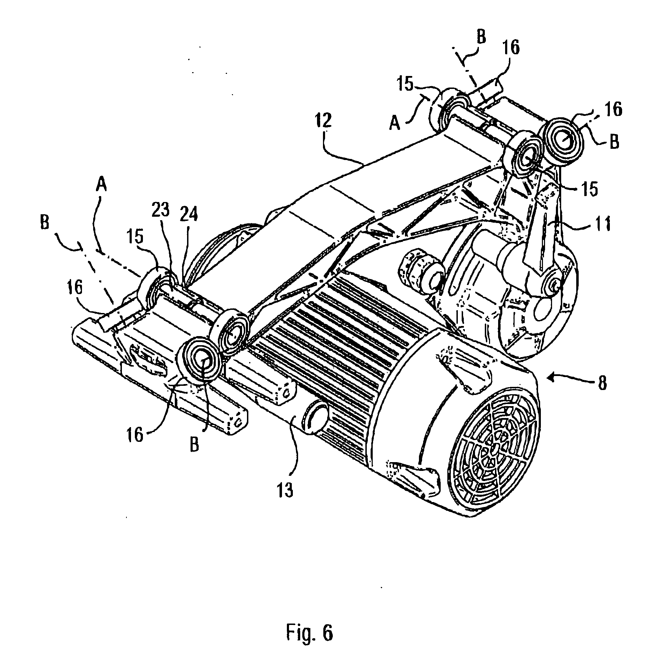

The carriage 12 is provided at the top with rolling bodies 15 and with further rolling bodies 16 (as better shown in Figures 4 and 6) arranged at ends of the carriage 12 opposite one another and suitable for interacting with the guide beam 5. Each rolling body 15 is rotatable around a rotating axis A arranged perpendicularly to the cutting plane. The further rolling bodies 16 are positioned symmetrically in relation to the plane C and are rotatable around rotation axes B arranged in a tilted manner in relation to the plane C.

The rolling bodies 15 and the further rolling bodies 16 are received inside a longitudinal cavity 14 provided in the guide beam 5, facing the support bed 2 and shaped such as to slidingly connect the carriage 12 to the guide beam 5. The longitudinal cavity 14 comprises a first pair of grooves 17 obtained on a wall 21, and arranged on opposite parts of the further longitudinal axis Y. The grooves 17 comprise first bottom surfaces 17a that are coplanar to one another and are shaped in such a way as to be able to house guide strips 18. Inside the longitudinal cavity 14 there is provided a second pair of grooves 19 shaped in a similar manner to the grooves 17 and having second bottom surfaces 19a that define lying planes F that intersect perpendicularly in an intersection line G that is parallel to the further longitudinal axis. This intersection line G is situated outside the profiled body 5 and together with the further longitudinal axis Y lies on the plane C. The second pair of grooves 19 is provided with further guide strips 20 facing inside the longitudinal cavity 14. The guide strips 18 and the further guide strips 20 are highly resistant to wear and are shaped in such a way as to interact respectively with the rolling bodies 15 and with the further rolling bodies 16. Owing to the configuration that has just been disclosed, the carriage 12 can run along the guide beam 5 without noticeable transverse play in relation to the latter. In fact, whereas the rolling bodies 15, by interacting with the guide strips 18, prevent the carriage 12 from moving to the wall 21 through the effect of loads generated during operation, the further rolling bodies 16, by interacting with the further guide strips 20, prevent the carriage 12 both from moving away from the wall 21, and from moving in a direction that is transverse to the plane C. On the carriage 12 regulating means 22 is provided that is suitable for interacting with support means 23 of the rolling bodies 15. Through the adjusting means 22 it is possible to adjust the position of the support means 23 in relation to housing seats 24 of the latter and it is therefore possible to adjust the position of the rolling bodies 15 in relation to the carriage. The play is thus recovered that occurs between the carriage 12 and the guide beam 5 in a direction that is transverse to the further longitudinal axis Y and is generated by the wear to the rolling bodies 15 and the further rolling bodies 16. In this way the carriage 12, and therefore the tool-motor unit 8, is correctly supported on the guide beam 5 even in harsher operating conditions, for example when the bridge structure 7 is tilted in relation to the support bed 2 to make cuts, for example jolly-cuts.

## Claims

1. Sawing machine comprising a guide beam (5) connected at its ends to uprights (3) and slidingly supporting by means of a carriage (12) a tool-motor unit (8) suitable for defining a cutting plane, between said guide beam (5) and said carriage (12) there being arranged rolling bodies (15) having rotation axes (A) that are transverse to said cutting plane, **characterised in that** there are provided further rolling bodies (16) having further rotation axes (B) arranged in such a way as to oppose shifts of said carriage (12) that are transverse to said cutting plane.

2. Sawing machine according to claim 1, wherein said beam comprises a profiled body (5) extending along an axis that extends in a longitudinal direction and having a cross section provided with a plurality of grooves (17, 19) shaped in such a way as to act as guide means for rolling bodies.

3. Sawing machine according to claim 1 or 2, wherein said further rotation axes (B) are arranged in such a way as to form an acute angle in relation to said cutting plane.

4. Sawing machine according to claim 3, wherein said acute angle is 45°.

5. Sawing machine according to claim 1 or 2, wherein said further rotation axes (B) are arranged parallel to said cutting plane.

6. Sawing machine according to any preceding claim and furthermore comprising adjusting means (22) suitable for interacting with support means (23) of said rolling bodies (15) in such a way as to substantially reduce the play between said carriage (12) and said guide beam (5).

7. Sawing machine according to any preceding claim wherein said guide beam (5) comprises a longitudinal cavity (14) extending between said uprights (3) shaped in such a way as to slidingly connect the carriage 12 to its own interior.

8. Sawing machine according to claim 2, wherein said plurality of grooves comprises a first pair of grooves (17) that are parallel to one another, lying on opposite parts of said axis.

9. Sawing machine according to claim 8, wherein said first pair of grooves (17) comprises first bottom surfaces (17a) that have a common plane.

10. Sawing machine according to claim 9 or 8 or 2, wherein said plurality of grooves (14) comprises a second pair of grooves (19) having second bottom surfaces (19a) that define lying planes (F) that intersect on an intersection line (G) parallel to said axis.

11. Sawing machine according to claim 10, wherein said intersection line (G) is located outside said profiled body (5).

12. Sawing machine according to claim 11 or 10, wherein said intersection line (G) and said axis are arranged in such a way as to define a plane (C) of symmetry of said profiled body (5).

13. Sawing machine according to claim 8 or 9, or according to any one of claims 10 to 12 as claim 10 is appended to claim 8 or 9, wherein with said first pair of grooves (17) there are associated guide strips (18) suitable for interacting with said rolling bodies (15).

14. Sawing machine according to claim 13, wherein said guide strips (18) are interchangeable and made of a material having high resistance to wear, for example stainless steel.

15. Sawing machine according to any one of claims 10 to 12, or according to claim 14 or 13 as claim 13 is appended to any one of one of claims 10 to 12, wherein along said second pair of grooves (19) further guide strips (20) are housed suitable for interacting with said further rolling bodies (16).

16. Sawing machine according to claim 15, wherein said further guide strips (20) are interchangeable and made of a material having high resistance to wear, for example stainless steel.

17. Sawing machine according to any preceding claim, wherein said rolling bodies comprise bearing means (15).

18. Sawing machine according to any preceding claim, wherein said further rolling bodies comprise further bearing means (16).

19. Sawing machine according to any preceding claim, wherein said beam (5) is made in material having high mechanical performance and reduced weight, for example extruded aluminium.

20. Machine according to any preceding claim, wherein said carriage (12) is made of material having high mechanical performance and reduced weight.

21. Profiled means that comprises a profiled body (5) extending along an axis that extends in a longitudinal direction and having a cross section provided with a plurality of grooves (17, 19) shaped in such a way as to act as guide means for rolling bodies.

22. Profiled means according to claim 21, wherein said plurality of grooves (17, 19) comprises at least a pair of grooves lying on opposite parts of said axis.

23. Profiled means according to claim 22 wherein said at least one pair of grooves comprises a first pair of grooves (17) having first bottom surfaces (17a) that are coplanar to one another.

24. Profiled means according to claim 22 or 23, wherein said at least one pair of grooves comprises a second pair of grooves (19) having flat second bottom surfaces (19a) that define lying planes (F) that intersect on an intersection line (G) parallel to said axis.

25. Profiled means according to claim 24, wherein said intersection line (G) is located outside said profiled body (5).

26. Profiled means according to claim 25 or 24, wherein said intersection line (G) and said axis are arranged in such a way as to define a plane (C) of symmetry of said profiled body.
